(19) Europäisches Patentamt / European Patent Office / Office européen des brevets

(11) **EP 4 756 969 A1**

(12) **EUROPEAN PATENT APPLICATION**
published in accordance with Art. 153(4) EPC

(43) Date of publication:
**10.06.2026 Bulletin 2026/24**

(21) Application number: **24865092.1**

(22) Date of filing: **29.07.2024**

(51) International Patent Classification (IPC):
$H01M\ 10/058\ ^{(2010.01)}$    $H01M\ 4/505\ ^{(2010.01)}$
$H01M\ 4/525\ ^{(2010.01)}$    $H01M\ 10/052\ ^{(2010.01)}$
$H01M\ 50/414\ ^{(2021.01)}$

(52) Cooperative Patent Classification (CPC):
**H01M 4/505; H01M 4/525; H01M 10/052;
H01M 10/058; H01M 50/414; Y02E 60/10**

(86) International application number:
**PCT/JP2024/026920**

(87) International publication number:
**WO 2025/057585 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.09.2023 JP 2023149470**

(71) Applicant: **GS Yuasa International Ltd.
Kisshoin, Minami-ku,
Kyoto-shi, Kyoto 601-8520 (JP)**

(72) Inventor: **YAMAKAWA, Yuto
Kyoto-shi, Kyoto 601-8520 (JP)**

(74) Representative: **Isarpatent
Patent- und Rechtsanwälte Part G mbB
Friedrichstrasse 31
80801 München (DE)**

(54) **NONAQUEOUS ELECTROLYTE POWER STORAGE ELEMENT AND POWER STORAGE DEVICE**

(57) A nonaqueous electrolyte energy storage device according to one aspect of the present invention includes an electrode assembly including a positive electrode containing positive active material particles, and a negative electrode, in which a void index A represented by the following Formula (1) in the positive active material particles is 5 or more, a boron element is present on at least a part of a surface of the positive active material particles, and at least a part of the electrode assembly is in a pressed state:

$$A = S_1/S_2 \qquad (1)$$

in Formula (1), $S_1$ is a BET specific surface area of the positive active material particles, and $S_2$ is a specific surface area obtained when the positive active material particles are assumed to be spheres each having a diameter equal to an average particle size thereof.

Fig. 1

EP 4 756 969 A1

**Description**

TECHNICAL FIELD

The present invention relates to a nonaqueous electrolyte energy storage device and an energy storage apparatus.

BACKGROUND ART

Nonaqueous electrolyte secondary batteries represented by lithium ion secondary batteries are often used for electronic devices such as personal computers and communication terminals, automobiles, and the like, because the batteries are high in energy density. The nonaqueous electrolyte secondary batteries generally include a pair of electrodes electrically separated from each other by a separator, and a nonaqueous electrolyte interposed between the electrodes, and are configured to allow charge transport ions to be transferred between the two electrodes for charge-discharge. In addition, capacitors such as lithium ion capacitors and electric double layer capacitors are also widely used as nonaqueous electrolyte energy storage devices other than the nonaqueous electrolyte secondary batteries.

As a positive active material for the nonaqueous electrolyte energy storage device, particulate active materials such as lithium transition metal composite oxide particles are widely used. Patent Document 1 describes a positive active material particle powder that is a composite oxide containing a lithium element and a manganese element and at least one of a nickel element and a cobalt element, and also describes a nonaqueous electrolyte secondary battery in which such a positive active material particle powder is used in a positive electrode.

PRIOR ART DOCUMENT

PATENT DOCUMENT

Patent Document 1: JP-A-2015-153551

SUMMARY OF THE INVENTION

PROBLEMS TO BE SOLVED BY THE INVENTION

A nonaqueous electrolyte energy storage device is desirable to have low resistance from the viewpoint of power performance and the like. In nonaqueous electrolyte energy storage devices, it is common that even when the initial resistance is low, the resistance increases with charge-discharge cycles.

An object of the present invention is to provide a nonaqueous electrolyte energy storage device and an energy storage apparatus that have low resistance after charge-discharge cycles.

MEANS FOR SOLVING THE PROBLEMS

A nonaqueous electrolyte energy storage device according to one aspect of the present invention includes: an electrode assembly including a positive electrode containing positive active material particles, and a negative electrode, in which a void index A represented by the following Formula (1) in the positive active material particles is 5 or more, a boron element is present on at least a part of a surface of the positive active material particles, and at least a part of the electrode assembly is in a pressed state.

$$A = S_1/S_2 \qquad (1)$$

(In Formula (1), $S_1$ is a BET specific surface area of the positive active material particles, and $S_2$ is a specific surface area obtained when the positive active material particles are assumed to be spheres each having a diameter equal to an average particle size thereof.)

An energy storage apparatus according to another aspect of the present invention includes two or more energy storage devices and one or more of the nonaqueous electrolyte energy storage devices.

ADVANTAGES OF THE INVENTION

According to one aspect of the present invention, it is possible to provide a nonaqueous electrolyte energy storage device and an energy storage apparatus having low resistance after charge-discharge cycles.

BRIEF DESCRIPTION OF THE DRAWINGS

Fig. 1 is a perspective view illustrating an embodiment of a nonaqueous electrolyte energy storage device.
Fig. 2 is a schematic view illustrating an embodiment of an energy storage apparatus configured by assembling a plurality of nonaqueous electrolyte energy storage devices.

MODE FOR CARRYING OUT THE INVENTION

First, outlines of a nonaqueous electrolyte energy storage device and an energy storage apparatus disclosed in the present specification will be described.

[1] A nonaqueous electrolyte energy storage device according to one aspect of the present invention includes an electrode assembly including a positive electrode containing positive active material particles, and a negative electrode, in which a void index A represented by the following Formula (1) in the positive active material particles is 5 or more, a boron element is present on at least a part of a surface of the positive active material particles, and at least a part of the electrode assembly is in a pressed state.

$$A = S_1/S_2 \qquad (1)$$

(In Formula (1), $S_1$ is a BET specific surface area of the positive active material particles, and $S_2$ is a specific surface area obtained when the positive active material particles are assumed to be spheres each having a diameter equal to an average particle size thereof.)

The nonaqueous electrolyte energy storage device according to [1] has low resistance after charge-discharge cycles. Although the reason for this is not clear, the following reasons are presumed. The positive active material particles having a void index A of 5 or more represented by Formula (1) are positive active material particles having many voids. Such positive active material particles having many voids tend to allow a nonaqueous electrolyte to easily permeate into the inside of the voids, and therefore have low initial resistance. On the other hand, the electrode assembly expands with repeated charge-discharge, thereby increasing the resistance. In contrast, by keeping at least a part of the electrode assembly in a pressed state, expansion of the electrode assembly can be suppressed, and an increase in resistance can be suppressed. However, in the case of an electrode assembly in which positive active material particles having many voids are used, cracking of the positive active material particles is likely to occur by pressing. Since cracking of the positive active material particles reduces electronic conductivity between the positive active material particles, resistance increases with repeated charge-discharge. Therefore, by allowing a boron element to be present on at least a part of a surface of the positive active material particles having many voids, the boron element protects grain boundaries of primary particles on the surface of the positive active material particles, which serve as starting points of cracking, thereby making cracking less likely to occur. For the reasons described above, in the nonaqueous electrolyte energy storage device according to [1], in which positive active material particles having many voids and having a boron element present on at least a part of the surface are used and at least a part of the electrode assembly is in a pressed state, the initial resistance is low and an increase in resistance after charge-discharge cycles is sufficiently suppressed; as a result, it is presumed that the resistance after charge-discharge cycles is low.
The "specific surface area when the positive active material particles are assumed to be spheres each having a diameter equal to an average particle size thereof" is a value obtained from the average particle size and the true density of the positive active material particles. Specifically, from the average particle size of the positive active material particles, the surface area per one positive active material particle is obtained on the assumption that the positive active material particles are spheres each having a diameter equal to the average particle size thereof. In addition, from the average particle size and the true density of the positive active material particles, a mass per one positive active material particle is obtained on the assumption that the positive active material particles are spheres each having a diameter equal to an average particle size thereof. By dividing the obtained surface area per one positive active material particle by the obtained mass per one positive active material particle, the "specific surface area when the positive active material particles are assumed to be spheres each having a diameter equal to the average particle size thereof" is obtained.
The "BET specific surface area" and the "average particle size" of the positive active material particles are values measured for positive active material particles taken out from the nonaqueous electrolyte energy storage device and treated in accordance with the following procedure. First, the nonaqueous electrolyte energy storage device is subjected to constant current discharge at a discharge current of 0.05 C until the voltage reaches the end-of-discharge voltage during normal use. Here, the "normal use" means a case where the nonaqueous electrolyte energy storage device is used by adopting the charge-discharge conditions recommended or specified for the nonaqueous electrolyte energy storage device. The nonaqueous electrolyte energy storage device in this state is disassembled, and the positive electrode is taken out; a half cell using lithium metal as a counter electrode is assembled; and constant current discharge is performed at a discharge current of 10 mA per 1 g of the positive active material particles until the positive potential reaches 3.0 V vs. Li/Li$^+$, thereby adjusting the positive electrode to the completely discharged state. The device is disassembled again, and the positive electrode is taken out. Operations from disassembly of the nonaqueous electrolyte energy storage device to taking out the positive electrode from the half cell are performed in an argon atmosphere having a dew point of -60°C or lower. The taken-out positive electrode is fired in the atmosphere at 600°C for 3 hours to separate the positive active material particles from members other than the positive active material particles (for example, a conductive agent, a binder, and a positive electrode substrate, and the like).

The "BET specific surface area" of the positive active material particles is defined as a value obtained by the measurement according to the following procedure. 1.00 g of the positive active material particles is placed in a sample tube for measurement and dried under reduced pressure at 120°C for 12 hours. Next, by a nitrogen gas adsorption method using liquid nitrogen, an adsorption isotherm is measured within a range in which the relative pressure P/P0 (P0 = about 770 mmHg) is from 0 to 1. From a region of P/P0 = 0.05 to 0.3 of the adsorption isotherm obtained, five points are extracted to perform a BET plot, and the BET specific surface area is calculated from the y-intercept and the slope of the straight line.

The "average particle size" of the positive active material particles is a value at which a volume-based cumulative distribution calculated in accordance with JIS-Z-8819-2 (2001) is 50% based on a particle size distribution measured by a laser diffraction/scattering method for a diluted solution obtained by diluting the particles with a solvent in accordance with JIS-Z-8825 (2013). The same applies to the average particle size of the negative active material described below.

[2] In the nonaqueous electrolyte energy storage device according to [1], the electrode assembly may further include a separator disposed between the positive electrode and the negative electrode, and the separator may have a layer that is in contact with the positive electrode and contains a resin as a main component.

The nonaqueous electrolyte energy storage device according to [2] has a lower resistance after charge-discharge cycles. Although the reason for this is not clear, the following reasons are presumed. The layer containing a resin as a main component in the separator is softer than, for example, a layer containing inorganic particles as a main component. In the nonaqueous electrolyte energy storage device according to [2], the positive electrode surface is in contact with such a soft layer, and thus, when at least a part of the electrode assembly is in a pressed state, cracking of the positive active material particles is less likely to occur. Therefore, it is presumed that the nonaqueous electrolyte energy storage device according to [2] has a lower resistance after charge-discharge cycles.

The "main component" refers to a component having the largest content on a mass basis.

[3] In the nonaqueous electrolyte energy storage device according to [1] or [2], the positive active material particles may contain a lithium transition metal composite oxide having an $\alpha$-NaFeO$_2$-type crystal structure.

In general, particles of a lithium transition metal composite oxide having an $\alpha$-NaFeO$_2$-type crystal structure are prone to cracking when pressed. Therefore, in the nonaqueous electrolyte energy storage device according to [3], in which the positive active material particles contain a lithium transition metal composite oxide having an $\alpha$-NaFeO$_2$-type crystal structure, the effect of having low resistance after charge-discharge cycles is particularly remarkable.

[4] In the nonaqueous electrolyte energy storage device according to any one of [1] to [3], at least a part of the electrode assembly may be in a state of being pressed at 0.5 MPa or more and 4 MPa or less.

In the nonaqueous electrolyte energy storage device according to [4], since at least a part of the electrode assembly is in a state of being pressed at an appropriate pressure, the resistance after charge-discharge cycles is lower.

The pressure applied to at least a part of the electrode assembly is a value measured by the following method. First, the nonaqueous electrolyte energy storage device is subjected to constant current discharge to the end-of-discharge voltage during normal use, and then is installed in an X-ray computed tomography (CT) apparatus. Scanning is performed along a direction parallel to the thickness direction of the electrode assembly to check whether or not the electrode assembly is in direct or indirect contact with the inner surface of the case. When the electrode assembly is not in direct or indirect contact with the inner surface of the case, the pressure applied to the electrode assembly is set to 0 MPa (the electrode assembly is not in a pressed state). When the electrode assembly is in direct or indirect contact with the inner surface of the case, an X-ray transmission image of the electrode assembly is captured, and the maximum thickness of the electrode assembly in the stacking direction is measured. The nonaqueous electrolyte energy storage device is disassembled, and the electrode assembly is taken out and installed in the autograph. A load is gradually applied to the electrode assembly by the autograph, and the electrode assembly is compressed until the maximum thickness in the thickness direction of the electrode assembly measured from an X-ray transmission image is reached. At this time, the load measured by the autograph is defined as a load applied to the electrode assembly. A value obtained by dividing the load applied to the electrode assembly by an area of a contact surface between the autograph and the electrode assembly is defined as the pressure applied to at least a part of the electrode assembly. Usually, a load is applied to the pair of opposing surfaces of the electrode assembly by the case, and the area of only one surface of the pair of surfaces is defined as the area of the surface to which the load is applied.

[5] An energy storage apparatus according to another aspect of the present invention includes two or more energy storage devices and one or more of the nonaqueous electrolyte energy storage devices according to any one of [1] to [4].

Since the energy storage apparatus according to [5] includes one or more of the nonaqueous electrolyte energy storage devices according to any one of [1] to [4], the resistance after charge-discharge cycles is low.

A nonaqueous electrolyte energy storage device, an energy storage apparatus, and a method for manufacturing a nonaqueous electrolyte energy storage device according to an embodiment of the present invention, and other embodiments will be described in detail. It is to be noted that the name of each structural member (each component) used in each embodiment may be different from the name of each structural member (each component) used in BACKGROUND ART.

<Nonaqueous electrolyte energy storage device>

A nonaqueous electrolyte energy storage device according to an embodiment of the present invention (hereinafter, also referred to simply as an "energy storage device") includes an electrode assembly including a positive electrode, a negative electrode, and a separator, a nonaqueous electrolyte, and a case that accommodates the electrode assembly and the nonaqueous electrolyte. The electrode assembly is typically a stacked type in which a plurality of positive electrodes and a plurality of negative electrodes are stacked with the separator interposed therebetween, or a wound type in which a positive electrode and a negative electrode are wound in a state of being stacked with a separator interposed therebetween. That is, the separator is disposed between the positive electrode and the negative electrode. As the case, a known case such as a metal case or a resin case can be used. The case may have a box shape, or may have a shape formed by heat-sealing a film case (a resin film case, a metal-resin composite film case, or the like). The nonaqueous electrolyte is present in a state of being contained in the positive electrode, the negative electrode, and the separator. A nonaqueous electrolyte secondary battery (hereinafter, also referred to simply as a "secondary battery") will be described as an example of the nonaqueous electrolyte energy storage device.

(Positive electrode)

The positive electrode includes a positive electrode substrate and a positive active material layer disposed on the positive electrode substrate directly or with an intermediate layer interposed therebetween.

The positive electrode substrate has conductivity. Whether or not the positive electrode substrate has "conductivity" is determined by using, as a threshold, a volume resistivity of $10^{-2}$ $\Omega$ ·cm measured in accordance with JIS-H-0505 (1975). As a material for the positive electrode substrate, a metal such as aluminum, titanium, tantalum, or stainless steel, or an alloy thereof is used. Among them, aluminum or an aluminum alloy is preferable from the viewpoint of electric potential resistance, high conductivity, and costs. Examples of the positive electrode substrate include a foil, a deposited film, a mesh, and a porous material, and the foil is preferable from the viewpoint of costs. Therefore, the positive electrode substrate is preferably an aluminum foil or an aluminum alloy foil. Examples of the aluminum or aluminum alloy include A1085, A3003, and A1N30 specified in JIS-H-4000 (2014) or JIS-H-4160 (2006).

The average thickness of the positive electrode substrate is preferably 3 $\mu$m or more and 50 $\mu$m or less, more preferably 5 $\mu$m or more and 40 $\mu$m or less, still more preferably 8 $\mu$m or more and 30 $\mu$m or less, and particularly preferably 10 $\mu$m or more and 25 $\mu$m or less. By setting the average thickness of the positive electrode substrate to be within the above range, it is possible to increase the strength of the positive electrode substrate while increasing the energy density of the nonaqueous electrolyte energy storage device.

The intermediate layer is a layer disposed between the positive electrode substrate and the positive active material layer. The intermediate layer contains a conductive agent such as carbon particles, thereby reducing contact resistance between the positive electrode substrate and the positive active material layer. The composition of the intermediate layer is not particularly limited, and the intermediate layer contains, for example, a binder and a conductive agent.

The positive active material layer contains positive active material particles. The positive active material layer contains optional components such as a conductive agent, a binder, a thickener, and a filler, if necessary.

The positive active material particles are particles having a void index A represented by the following Formula (1) of 5 or more.

$$A = S_1/S_2 \qquad (1)$$

(In Formula (1), $S_1$ is a BET specific surface area of the positive active material particles, and $S_2$ is a specific surface area obtained when the positive active material particles are assumed to be spheres each having a diameter equal to an average particle size thereof.)

The lower limit of the void index A is 5, preferably 5.5, and more preferably 6. When the void index A is equal to or greater than the above lower limit, the initial resistance of the nonaqueous electrolyte energy storage device is reduced, and as a result, the resistance after charge-discharge cycles may also be reduced. The upper limit of the void index A may be 15, and may be 12, 10, 9, or 8. When the void index A is equal to or less than the above upper limit, cracking of the positive active material particles when pressing the electrode assembly is suppressed, and the resistance after charge-discharge cycles may also be reduced. The void index A may be equal to or greater than any of the above-described lower limits and equal to or less than any of the above-described upper limits.

Positive active material particles having a predetermined void index A can be produced by a known method. In addition, the void index A may be measured for commercially available positive active material particles, and positive active material particles having a predetermined void index A may be selected and used.

The positive active material particles are usually secondary particles formed by aggregation of a plurality of primary particles. The primary particles may be particles composed substantially only of a positive active material (a material capable of occluding and releasing charge-transport ions such as lithium ions). In one aspect of the present invention, a boron element is present on at least a part of a surface of the positive active material particles that are secondary particles. It is preferable that a boron element is present on at least a part of grain boundaries of the primary particles on the surface of the positive active material particles. The degree of aggregation of the primary particles depending on the production conditions, the shapes of the primary particles and the secondary particles, the particle size ratio of the primary particle size to the secondary particle size, and the like affect the void index A in the positive active material particles.

For example, in the case of positive active material particles containing a lithium transition metal composite oxide, positive active material particles having a void index A of 5 or more can be effectively produced by a method using the following precipitation method. An aqueous sulfate solution in which a sulfate containing a transition metal element (for example, a nickel element, a manganese element, a cobalt element, and the like) is dissolved is prepared. In addition, ion-exchanged water is poured into a reaction vessel, and oxygen is removed by nitrogen bubbling or the like. While stirring the ion-exchanged water in the reaction vessel at a rotational speed of, for example, about 1,500 rpm using a paddle blade provided with a stirring motor, the aqueous sulfate solution is added dropwise into the reaction vessel. At this time, the pH is controlled so as to be always maintained at, for example, 11.0 ($\pm$0.1) by appropriately adding dropwise, for example, a mixed alkaline solution containing sodium hydroxide, ammonium, and hydrazine. By this dropping, a precipitate that is a precursor of the positive active material (a hydroxide precursor) is formed, and at this time, by performing high-speed stirring, the precipitate is granulated into a spherical shape. In this case, when the dropping rate is increased, a precursor having a large void index A (having many voids) is more easily obtained. When producing positive active material particles having a void index A of 5 or more, for example, it is preferable that the dropping rate is in a range of 2.3 cm$^3$/min or more and 3.3 cm$^3$/min or less. However, suitable conditions are appropriately changed depending on the concentration of the aqueous sulfate solution to be added dropwise, the amount of ion-exchanged water, and the like. After completion of the dropwise addition, the liquid containing the precipitate in the reaction vessel is further stirred for, for example, 1 hour, and then sufficiently allowed to stand. Thereafter, the precipitate is dried in a drying oven after suction filtration and washing with ion-exchanged water. In order to make the particle size uniform, the dried product is crushed for several minutes, thereby obtaining particles of a hydroxide precursor. The obtained hydroxide precursor and a lithium source are mixed and calcined, thereby obtaining positive active material particles. The calcination can be performed, for example, by raising the temperature to 1,000°C for 10 hours and holding the temperature for 4 hours in an electric furnace under an airflow atmosphere. After the calcination, the calcined product may be crushed for several minutes in order to make the particle size uniform.

The method for producing positive active material particles having a void index A of 5 or more is not limited to the above method. For example, positive active material particles having a controlled void index A can also be obtained by a spray-drying method or the like using an aqueous solution containing hydroxide precursor particles. In addition, as described below, before calcination, a boron source may be mixed together with the hydroxide precursor and the lithium source and subjected to calcination. A compound containing a boron element may be coated, or the like, on particles of a positive active material that do not contain a boron element and that are obtained through calcination.

The BET specific surface area ($S_1$) of the positive active material particles is, for example, preferably 0.8 m$^2$/g or more and 6.0 m$^2$/g or less, more preferably 1.0 m$^2$/g or more and 4.0 m$^2$/g or less, still more preferably 1.2 m$^2$/g or more and 3.0 m$^2$/g or less, and yet still more preferably 1.6 m$^2$/g or more and 2.6 m$^2$/g or less. In some aspects, the BET specific surface area ($S_1$) of the positive active material particles may be 2.0 m$^2$/g or more or 2.0 m$^2$/g or less. By setting the BET specific surface area ($S_1$) of the positive active material particles within the above range, it is possible to make the resistance after charge-discharge cycles low while ensuring sufficiently excellent other charge-discharge performance.

The average internal porosity of the positive active material particles is preferably more than 6.0% and 20.0% or less, and more preferably more than 10.0% and 16.0% or less. By setting the average internal porosity of the positive active material particles within the above range, it is possible to further reduce the resistance after charge-discharge cycles and the like.

The "average internal porosity" refers to an average value of the internal porosities of any ten positive active material particles. The internal porosity refers to a ratio of a cross-sectional area of voids formed in the interior of the particle to an apparent cross-sectional area of the positive active material particle (that is, a cross-sectional area including internal voids). The average internal porosity is determined by the following method. That is, a positive electrode or positive active material particles to be measured are fixed with a thermosetting resin. For the positive electrode or positive active material particles fixed with the resin, a cross section is exposed by an ion milling method to prepare a measurement sample. Using a scanning electron microscope (SEM), the magnification is set so that a predetermined number (for example, about 10 to 100) of positive active material particles can be observed within one field of view, and a cross-sectional SEM image of the positive active material particles is captured. The observation conditions of the SEM are not particularly limited, but are usually a magnification of $1,000\times$ to $5,000\times$ (for example, $2,000\times$). Next, from the obtained SEM image, based on differences in tone or shading, a cross section of the positive active material particles and voids in the particles are distinguished (typically, by binarization processing). Then, in the cross section of the positive active material particles, a value obtained by $(S2/S1) \times 100$ is calculated as the internal porosity from an apparent cross-sectional area (the total area of the particle) S1 of the positive active material particles and an area S2 occupied by voids in the particles. By arithmetically averaging the internal porosities of the predetermined number of particles, the average internal porosity can be obtained. The internal porosity of each positive active material particle and the average internal porosity can be obtained using general image analysis software. In addition, acquisition of an SEM image for obtaining the average internal porosity of the positive active material particles is performed for a positive electrode or positive active material particles adjusted to a completely discharged state by the same procedure as in measuring the above-described BET specific surface area and average particle size.

The average particle size of the positive active material particles is, for example, preferably 0.1 $\mu$m or more and 20 $\mu$m or less, more preferably 1 $\mu$m or more and 8 $\mu$m or less, still more preferably 2 $\mu$m or more and 6 $\mu$m or less, and yet still more preferably 3 $\mu$m or more and 5 $\mu$m or less. By setting the average particle size of the positive active material particles to be equal to or greater than the above lower limit, the positive active material particles are easily produced or handled. By setting the average particle size of the positive active material particles to be equal to or less than the above upper limit, the electronic conductivity of the positive active material layer is improved, and the resistance after charge-discharge cycles becomes lower.

A crusher, a classifier, or the like is used to obtain positive active material particles with a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. When performing crushing, wet crushing which is performed in the presence of water or an organic solvent such as hexane can also be employed. As a classification method, a sieve, an air classifier, or the like is used in either a dry or wet manner, as necessary.

As the positive active material constituting the positive active material particles (a material capable of occluding and releasing charge-transport ions such as lithium ions), a material can be appropriately selected from known positive active materials. As a positive active material for a lithium ion secondary battery, a material capable of occluding and releasing lithium ions is typically used. Examples of the positive active material include lithium transition metal composite oxides that have an $\alpha$-NaFeO$_2$-type crystal structure, lithium transition metal composite oxides that have a spinel-type crystal structure, polyanion compounds, chalcogenides, and sulfur. Examples of the lithium transition metal composite oxides that have an $\alpha$-NaFeO$_2$-type crystal structure include Li[Li$_x$Ni$_{(1-x)}$]O$_2$ ($0 \leq x < 0.5$), Li[Li$_x$Ni$_y$Co$_{(1-x-y)}$]O$_2$ ($0 \leq x < 0.5$, $0 < y < 1$, $0 < 1-x-\gamma$), Li[Li$_x$Co$_{(1-x)}$]O$_2$ ($0 \leq x < 0.5$), Li[Li$_x$Ni$_\gamma$Mn$_{(1-x-\gamma)}$]O$_2$ ($0 \leq x < 0.5$, $0 < y < 1$, $0 < 1-x-y$), Li[Li$_x$Ni$_\gamma$Mn$_\beta$Co$_{(1-x-\gamma-\beta)}$]O$_2$ ($0 \leq x < 0.5$, $0 < y$, $0 < \beta$, $0.5 < y + \beta < 1$, $0 < 1-x-\gamma-\beta$), and Li[Li$_x$Ni$_\gamma$Co$_\beta$Al$_{(1-x-\gamma-\beta)}$]O$_2$ ($0 \leq x < 0.5$, $0 < y$, $0 < \beta$, $0.5 < y + \beta < 1$, $0 < 1-x-\gamma-\beta$). Examples of the lithium transition metal composite oxides that have a spinel-type crystal structure include Li$_x$Mn$_2$O$_4$ and Li$_x$Ni$_y$Mn$_{(2-y)}$O$_4$. Examples of the polyanion compounds include LiFePO$_4$, LiMnPO$_4$, LiNiPO$_4$, LiCoPO$_4$, Li$_3$V$_2$(PO$_4$)$_3$, Li$_2$MnSiO$_4$, and Li$_2$CoPO$_4$F. Examples of the chalcogenides include titanium disulfide, molybdenum disulfide, and molybdenum dioxide. Some of the atoms or polyanions in these materials may be substituted with atoms or anion species composed of other elements.

The positive active material particle preferably contains a lithium transition metal composite oxide having an $\alpha$-NaFeO$_2$-type crystal structure. The lithium transition metal composite oxide preferably contains a nickel element, a cobalt element, and a manganese or aluminum element, and more preferably contains a nickel element, a cobalt element, and a manganese element. The content of the nickel element with respect to all metal elements other than the lithium element contained in the lithium transition metal composite oxide is preferably 10 mol% or more and 80 mol% or less, and more preferably 30 mol% or more and 70 mol% or less. The content of the cobalt element with respect to all metal elements other than the lithium element contained in the lithium transition metal composite oxide is preferably 5 mol% or more and 60 mol% or less, and more preferably 10 mol% or more and 40 mol% or less. The content of the manganese element with respect to all metal elements other than the lithium element contained in the lithium transition metal composite oxide is preferably 5 mol% or more and 60 mol% or less, and more preferably 10 mol% or more and 40 mol% or less. The total content of the nickel element, the cobalt element, and the manganese element with respect to all metal elements other than the lithium element contained in the lithium transition metal composite oxide is preferably 95 mol% or more and 100 mol% or less, and more preferably 99.0 mol% or more or 99.9 mol% or more. By using such a lithium transition metal composite oxide, for example, the energy density can be increased. In addition, when an embodiment of the present invention is applied to a nonaqueous electrolyte energy storage device in which the positive active material particles contain such a lithium transition metal composite oxide, the effect that the resistance after charge-discharge cycles is low is particularly remarkably exhibited.

The element composition ratio of the positive active material (a material capable of occluding and releasing charge-transport ions) refers to an element composition ratio when the positive active material is brought into a completely discharged state by the same procedure as before measuring the BET specific surface area and average particle size of the positive active material particles.

The positive active material (a material capable of occluding and releasing charge-transport ions) may be used alone as one type, or two or more types thereof may be used as a mixture. The positive active material preferably contains the lithium transition metal composite oxide in a proportion of 50 mass% or more (preferably 70 mass% to 100 mass%, more preferably 80 mass% to 100 mass%, and still more preferably 90 mass% to 100 mass%). The positive active material may be substantially composed of only the lithium transition metal composite oxide.

A boron element is present on at least a part of the surface of the positive active material particles. It is preferable that a boron element is present on at least a part of grain boundaries of the primary particles on the surface of the positive active material particles. When the boron element is present on at least a part of grain boundaries of the primary particles on the surface of the positive active material particles, cracking of the positive active material particles becomes particularly less likely to occur, and the resistance after charge-discharge cycles becomes lower.

A boron element may be present in the form of a compound. Examples of compounds containing a boron element include inorganic compounds such as boron oxide ($B_2O_3$) and boric acid ($H_3BO_3$). The compound containing a boron element may be composed of a boron element and an oxygen element, may be composed of a boron element, an oxygen element, and a hydrogen element, and may further contain other elements. The compound containing a boron element may be, for example, dispersed on the surface of the positive active material particles, or may form a coating layer.

In one aspect of the present invention, the positive active material particles may be composed of a lithium transition metal composite oxide and a compound containing a boron element. For example, the positive active material particles may include secondary particles formed by aggregation of primary particles of the lithium transition metal composite oxide, and a compound containing a boron element may be present on at least a part of the surface of the secondary particles and at least a part of grain boundaries of the primary particles on the surface of the secondary particles.

Examples of a method for causing a boron element to be present on at least a part of the surface of the positive active material particles include a method of coating the surface of the positive active material particles (a material capable of occluding and releasing charge-transport ions) with a compound containing a boron element. After coating with a compound containing a boron element, calcination or the like may be performed. Examples thereof include a method in which a boron source is added during synthesis of the positive active material and calcined, thereby supporting a compound containing a boron element on the surface of the positive active material particles. As the positive active material particles in which a boron element is present on at least a part of the surface, a commercially available product may also be used.

The content of the boron element in the positive active material particles is preferably 0.05 mol% or more and 3 mol% or less, and more preferably 0.2 mol% or more and 2 mol%, with respect to the content of all metal elements other than the lithium element contained in the positive active material particles. By setting the content of the boron element within the above range, it is possible to more sufficiently suppress cracking of the positive active material particles and to further reduce the resistance after charge-discharge cycles, and the like.

The contents of the boron element and all metal elements other than the lithium element contained in the positive active material particles are determined by inductively coupled plasma optical emission spectrometry (ICP). Specifically, the contents are measured by the following method for positive active material particles taken out from the nonaqueous electrolyte energy storage device and treated by the same procedure as when measuring the "BET specific surface area" and "average particle size" of the positive active material particles. The positive active material particles are completely dissolved by a microwave decomposition method using an acid capable of dissolving the boron element and all metal elements contained in the positive active material particles. Next, this solution is diluted with pure water to a predetermined volume to obtain a measurement solution. Then, using a multi-type ICP optical emission spectrometer ICPE-9820 (manufactured by Shimadzu Corporation), the concentrations of the boron element and all metal elements in the measurement solution are measured by ICP optical emission spectrometry. The element contents in the positive active material particles are quantified from the obtained concentrations of the respective elements. In calculating the concentration of each element in the measurement solution, a calibration curve method is used. In addition, the presence of a boron element on at least a part of the surface of the positive active material particles can be confirmed, for example, by observing the surface of the positive active material particles with a scanning electron microscope-energy dispersive X-ray analyzer (SEM-EDX), an electron probe microanalyzer (EPMA), or the like.

The content of the positive active material particles in the positive active material layer is preferably 50 mass% or more and 99 mass% or less, more preferably 70 mass% or more and 98 mass% or less, and still more preferably 80 mass% or more and 95 mass% or less. By setting the content of the positive active material particles within the above range, it is possible to achieve both higher energy density and manufacturability of the positive active material layer.

The conductive agent is not particularly limited as long as the agent is a material with conductivity. Examples of such a conductive agent include a carbonaceous material, a metal, and conductive ceramics. Examples of the carbonaceous material include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, the above materials may be used alone as one type, or two or more types thereof may be used as a mixture. Alternatively, these materials may be used in the form of a composite. For example, a composite material of carbon black and CNTs may be used. Among these materials, carbon black is preferable from the viewpoints of electronic conductivity and coatability, and in particular, acetylene black is preferable.

The content of the conductive agent in the positive active material layer is preferably 1 mass% or more and 10 mass% or less, more preferably 3 mass% or more and 9 mass% or less. By setting the content of the conductive agent within the above range, it is possible to increase the energy density of the nonaqueous electrolyte energy storage device.

Examples of the binder include thermoplastic resins such as fluororesins (polytetrafluoroethylene (PTFE), polyvinylidene fluoride (PVDF), and the like), polyethylene, polypropylene, polyacrylic resins, and polyimide; elastomers such as an ethylene-propylene-diene rubber (EPDM), sulfonated EPDM, a styrene butadiene rubber (SBR), and a fluoro rubber; and polysaccharide polymers.

The content of the binder in the positive active material layer is preferably 1 mass% or more and 10 mass% or less, and more preferably 2 mass% or more and 9 mass% or less. By setting the content of the binder within the above range, it is possible to stably hold the positive active material particles.

Examples of the thickener include polysaccharide polymers such as carboxymethylcellulose (CMC) and methylcellulose. When the thickener contains a functional group that reacts with lithium or the like, the functional group may be deactivated in advance by methylation or the like. In an embodiment of the present invention, a thickener may not be contained in the positive active material layer.

The filler is not particularly limited. Examples of the filler include polyolefins such as polypropylene and polyethylene; inorganic oxides such as silicon dioxide, alumina, titanium dioxide, calcium oxide, strontium oxide, barium oxide, magnesium oxide, and aluminosilicate; hydroxides such as magnesium hydroxide, calcium hydroxide, and aluminum hydroxide; carbonates such as calcium carbonate; sparingly soluble ionic crystals such as calcium fluoride, barium fluoride, and barium sulfate; nitrides such as aluminum nitride and silicon nitride; and mineral-derived materials such as talc, montmorillonite, boehmite, zeolite, apatite, kaolin, mullite, spinel, olivine, sericite, bentonite, and mica, or artificial products thereof. In an embodiment of the present invention, a filler may not be contained in the positive active material layer.

The positive active material layer may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Nb, or W as a component other than the positive active material particles, the conductive agent, the binder, the thickener, and the filler.


(Negative electrode)

The negative electrode includes a negative electrode substrate and a negative active material layer disposed on the negative electrode substrate or with an intermediate layer interposed therebetween. The configuration of the intermediate layer is not particularly limited, and can be selected, for example, from the configurations exemplified for the positive electrode.

The negative electrode substrate has conductivity. As the material for the negative electrode substrate, a metal such as copper, nickel, stainless steel, nickel-plated steel, or aluminum, or an alloy thereof, a carbonaceous material, or the like is used. Among these materials, copper or a copper alloy is preferable. Examples of the negative electrode substrate include a foil, a deposited film, a mesh, and a porous material, and a foil is preferable from the viewpoint of costs. Therefore, the negative electrode substrate is preferably a copper foil or a copper alloy foil. Examples of the copper foil include a rolled copper foil and an electrolytic copper foil.

The average thickness of the negative electrode substrate is preferably 2 μm or more and 35 μm or less, more preferably 3 μm or more and 30 μm or less, still more preferably 4 μm or more and 25 μm or less, and particularly preferably 5 μm or more and 20 μm or less. By setting the average thickness of the negative electrode substrate within the above range, it is possible to increase the energy density of the nonaqueous electrolyte energy storage device while increasing the strength of the negative electrode substrate.

The negative active material layer contains a negative active material. The negative active material layer contains, as necessary, optional components such as a conductive agent, a binder, a thickener, and a filler. The optional components such as a conductive agent, a binder, a thickener, and a filler can be selected from the materials exemplified for the positive electrode.

The negative active material layer may contain a typical nonmetal element such as B, N, P, F, Cl, Br, and I, a typical metal element such as Li, Na, Mg, Al, K, Ca, Zn, Ga, Ge, Sn, Sr, and Ba, or a transition metal element such as Sc, Ti, V, Cr, Mn, Fe, Co, Ni, Cu, Mo, Zr, Ta, Hf, Nb, and W, as a component other than the negative active material, the conductive agent, the binder, the thickener, and the filler.

The negative active material can be appropriately selected from known negative active materials. As the negative active material for a lithium ion secondary battery, a material capable of absorbing and releasing lithium ions is usually used. Examples of the negative active material include metallic lithium; metals or metalloids such as Si and Sn; metal oxides or metalloid oxides such as a Si oxide, a Ti oxide, and a Sn oxide; titanium-containing oxides such as $Li_4Ti_5O_{12}$, $LiTiO_2$, and $TiNb_2O_7$; a polyphosphoric acid compound; silicon carbide; and carbon materials such as graphite and non-graphitic carbon (easily graphitizable carbon or hardly graphitizable carbon). Among these materials, the graphite and the non-graphitic carbon are preferable. In the negative active material layer, these materials may be used as one type, or two or more types thereof may be used as a mixture.

The "graphite" refers to a carbon material in which an average interplanar spacing ($d_{002}$) of the (002) plane determined by an X-ray diffraction method is 0.33 nm or more and less than 0.34 nm in a state before charge and discharge or in a discharged state. Examples of the graphite include natural graphite and artificial graphite. Artificial graphite is preferable from the viewpoint that a material that has stable physical properties can be obtained.

The "non-graphitic carbon" refers to a carbon material in which an average interplanar spacing ($d_{002}$) of the (002) plane determined by an X-ray diffraction method is 0.34 nm or more and 0.42 nm or less in a state before charge and discharge or in a discharged state. Examples of the non-graphitic carbon include hardly graphitizable carbon and easily graphitizable carbon. Examples of the non-graphitic carbon include a resin-derived material, a petroleum pitch or a material derived from a petroleum pitch, a petroleum coke or a material derived from a petroleum coke, a plant-derived material, and an alcohol-derived material.

Here, the "discharged state" of the carbon material means a state where the carbon material is discharged so that lithium ions that can be occluded and released upon charge-discharge are sufficiently released from the carbon material serving as the negative active material. For example, the discharged state of a half cell that includes, as a working electrode, a negative electrode containing a carbon material as a negative active material, and includes metallic lithium as a counter electrode is a state in which the open circuit voltage is 0.7 V or more.

The "hardly graphitizable carbon" refers to a carbon material in which the $d_{002}$ is 0.36 nm or more and 0.42 nm or less.

The "easily graphitizable carbon" refers to a carbon material in which the $d_{002}$ is 0.34 nm or more and less than 0.36 nm.

The negative active material is typically particles (powder). The average particle size of the negative active material can be, for example, 1 nm or more and 100 μm or less. When the negative active material is a carbon material, a titanium-containing oxide, or a polyphosphoric acid compound, the average particle size thereof may be 1 μm or more and 100 μm or less. When the negative active material is Si, Sn, Si oxide, Sn oxide, or the like, the average particle size thereof may be 1 nm or more and 1 μm or less. When the average particle size of the negative active material is equal to or greater than the above lower limit, the negative active material is easily produced or handled. When the average particle size of the negative active material is equal to or less than the above upper limit, the electronic conductivity of the negative active material layer is improved. A crusher, a classifier, or the like is used to obtain a powder with a predetermined particle size. The crushing method and classification method can be selected from, for example, the methods exemplified for the positive electrode. When the negative active material is a metal such as metallic lithium, the negative active material layer may have a foil shape.

The content of the negative active material in the negative active material layer is preferably 60 mass% or more and 99 mass% or less, and more preferably 90 mass% or more and 98 mass% or less. By setting the content of the negative active material within the above range, it is possible to achieve both higher energy density and manufacturability of the negative active material layer.

(Separator)

The separator can be appropriately selected from known separators. As the separator, for example, a separator composed only of a layer mainly containing a resin (hereinafter, also referred to as a "resin layer"), a separator in which a layer mainly containing inorganic particles (hereinafter, also referred to as an "inorganic layer") is formed on one surface or both surfaces of the resin layer, or the like can be used. The inorganic layer may contain a binder or the like as a component other than inorganic particles.

When the separator has a resin layer, it is preferable that this resin layer is in contact with the positive electrode. Specifically, it is preferable that the separator is disposed between the positive electrode and the negative electrode so that a surface of the resin layer in the separator is in direct contact with a surface of the positive active material layer in the positive electrode. In such a case, the resistance after charge-discharge cycles of the nonaqueous electrolyte energy storage device becomes lower. Examples of the nonaqueous electrolyte energy storage device having such a form include a nonaqueous electrolyte energy storage device in which a separator composed only of a resin layer is used, and a nonaqueous electrolyte energy storage device in which a separator having an inorganic layer formed on one surface of a resin layer is used and the separator is disposed so that the resin layer is on a positive electrode side and the inorganic layer is on a negative electrode side.

The resin layer in the separator may be a substrate layer. Examples of the form of the resin layer of the separator include a woven fabric, a nonwoven fabric, and a porous resin film. Among these forms, a porous resin film is preferable from the viewpoint of strength, and a nonwoven fabric is preferable from the viewpoint of the liquid retaining property of the nonaqueous electrolyte. As a material for the resin layer of the separator, for example, polyolefin such as polyethylene or polypropylene is preferable from the viewpoint of shutdown function, and polyimide, aramid, or the like is preferable from the viewpoint of resistance to oxidative decomposition. The polyolefin is preferable also from the viewpoint that it is relatively soft compared with other resins and can further suppress cracking of the positive active material particles. A material in which these resins are combined may also be used as the resin layer. The resin layer may contain inorganic particles or the like.

The content of the resin in the resin layer is preferably 70 mass% or more and 100 mass% or less, more preferably 90 mass% or more and 100 mass% or less, and still more preferably 99 mass% or more and 100 mass% or less.

The inorganic particles contained in the inorganic layer and the like have preferably a mass loss of 5% or less when heated from room temperature to 500°C in an air atmosphere of 1 atm, and more preferably a mass loss of 5% or less when heated from room temperature to 800°C. Examples of the inorganic compound constituting the inorganic particles include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compound, a single substance or a composite of these substances may be used alone, or two or more types thereof may be used as a mixture. Among these inorganic compounds, silicon oxide, aluminum oxide, or aluminosilicate is preferable from the viewpoint of the safety of the nonaqueous electrolyte energy storage device.

The separator has a porosity of preferably 80 vol% or less from the viewpoint of strength, and preferably 20 vol% or more from the viewpoint of discharge performance. Here, the "porosity" is a volume-based value, and means a value measured with a mercury porosimeter.

As the separator, a polymer gel composed of a polymer and a nonaqueous electrolyte may also be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel has an effect of suppressing liquid leakage. As the separator, the polymer gel may be used in combination with a porous resin film, a nonwoven fabric, or the like described above.

(Nonaqueous electrolyte)

The nonaqueous electrolyte can be appropriately selected from known nonaqueous electrolytes. For the nonaqueous electrolyte, a nonaqueous electrolyte solution may be used. The nonaqueous electrolyte solution includes a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, linear carbonates, carboxylic acid esters, phosphoric acid esters, sulfonic acid esters, ethers, amides, and nitriles. As the nonaqueous solvent, those in which some hydrogen atoms contained in these compounds are substituted with halogen may be used.

Examples of the cyclic carbonate include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among them, EC is preferable.

Examples of the linear carbonate include diethyl carbonate (DEC), dimethyl carbonate (DMC), ethyl methyl carbonate (EMC), diphenyl carbonate, trifluoroethyl methyl carbonate, and bis(trifluoroethyl) carbonate. Among them, EMC is preferable.

As the nonaqueous solvent, at least one of a cyclic carbonate and a linear carbonate is preferably used, and a combination of a cyclic carbonate and a linear carbonate is more preferably used. By using the cyclic carbonate, dissociation of the electrolyte salt can be promoted, thereby improving the ionic conductivity of the nonaqueous electrolyte solution. By using the linear carbonate, viscosity of the nonaqueous electrolyte solution can be kept low. When the cyclic carbonate and the linear carbonate are used in combination, a volume ratio of the cyclic carbonate to the linear carbonate (cyclic carbonate:linear carbonate) is preferably, for example, in a range from 5:95 to 50:50.

The electrolyte salt can be appropriately selected from known electrolyte salts. Examples of the electrolyte salt include lithium salt, sodium salt, potassium salt, magnesium salt, and onium salt. Among these, a lithium salt is preferable.

Examples of the lithium salt include inorganic lithium salts such as $LiPF_6$, $LiPO_2F_2$, $LiBF_4$, $LiClO_4$, and $LiN(SO_2F)_2$, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as $LiSO_3CF_3$, $LiN(SO_2CF_3)_2$, $LiN(SO_2C_2F_5)_2$, $LiN(SO_2CF_3)(SO_2C_4F_9)$, $LiC(SO_2CF_3)_3$, and $LiC(SO_2C_2F_5)_3$. Among these, inorganic lithium salts are preferable, and $LiPF_6$ is more preferable.

The content of the electrolyte salt in the nonaqueous electrolyte solution is, at 20°C under 1 atm, preferably 0.1 $mol/dm^3$ or more and 2.5 $mol/dm^3$ or less, more preferably 0.3 $mol/dm^3$ or more and 2.0 $mol/dm^3$ or less, still more preferably 0.5 $mol/dm^3$ or more and 1.7 $mol/dm^3$ or less, and particularly preferably 0.7 $mol/dm^3$ or more and 1.5 $mol/dm^3$ or less. By setting the content of the electrolyte salt within the above range, it is possible to increase the ionic conductivity of the nonaqueous electrolyte solution.

The nonaqueous electrolyte solution may contain an additive in addition to the nonaqueous solvent and the electrolyte salt. Examples of the additive include halogenated carbonic acid esters such as fluoroethylene carbonate (FEC) and difluoroethylene carbonate (DFEC); oxalates such as lithium bis(oxalate)borate (LiBOB), lithium difluorooxalatoborate (LiFOB), and lithium bis(oxalate)difluorophosphate (LiFOP); imide salts such as lithium bis(fluorosulfonyl) imide (LiFSI); aromatic compounds such as biphenyl, alkylbiphenyl, terphenyl, partially hydrogenated terphenyl, cyclohexylbenzene, t-butylbenzene, t-amylbenzene, diphenyl ether, and dibenzofuran; partially halogenated products of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluene sulfonate, dimethyl sulfate, ethylene sulfate, sulfolane, dimethyl sulfone, diethyl sulfone, dimethyl sulfoxide, diethyl sulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. These additives may be used alone as one type, or two or more types thereof may be used in combination.

The content of the additive contained in the nonaqueous electrolyte solution is preferably 0.01 mass% or more and 10 mass% or less, more preferably 0.1 mass% or more and 7 mass% or less, still more preferably 0.2 mass% or more and 5 mass% or less, and particularly preferably 0.3 mass% or more and 3 mass% or less, with respect to a total mass of the nonaqueous electrolyte solution. By setting the content of the additive within the above range, it is possible to improve capacity retention performance or cycle performance after high-temperature storage, or to further improve safety.

For the nonaqueous electrolyte, a solid electrolyte may be used, or a nonaqueous electrolyte solution and a solid electrolyte may be used in combination.

The solid electrolyte can be selected from any materials that have ionic conductivity for ions, such as lithium, sodium, and calcium, and are solid at normal temperature (for example, 15°C to 25°C). Examples of the solid electrolyte include a sulfide solid electrolyte, an oxide solid electrolyte, a nitride solid electrolyte, and a polymer solid electrolyte.

Examples of the sulfide solid electrolyte include $Li_2S-P_2S_5$, $LiI-Li_2S-P_2S_5$, and $Li_{10}Ge-P_2S_{12}$.

(Pressing of electrode assembly and the like)

At least a part of the electrode assembly is in a pressed state in the case. For example, at least a part of the electrode assembly is in a pressed state in a thickness direction (stacking direction) of each layer. For example, in the case of a flat wound-type electrode assembly, a flat portion may be in a state of being pressed from both sides. A part of the electrode assembly (for example, a pair of curved portions or the like in the flat wound-type electrode assembly) may not be in a pressed state. In addition, only a part of a stacked-type electrode assembly and a part of the flat portion of a flat wound-type electrode assembly, for example, only a central portion, may be in a pressed state. When at least a part of the electrode assembly is in a pressed state, the nonaqueous electrolyte energy storage device has low resistance after charge-discharge cycles.

The pressing (application of a load) to at least a part of the electrode assembly can be performed by, for example, a pressurizing member that pressurizes the case from the outside. The pressurizing member may be a restraining member that restrains the shape of the case. The pressurizing member (restraining member) is provided so as to sandwich and then press at least a part of the electrode assembly from both surfaces in the thickness direction via the case, for example. The surfaces of the electrode assembly to be pressed have contact with the inner surface of the case directly or with another member interposed therebetween. Thus, at least a part of the electrode assembly is pressed by pressurizing the case. Examples of the pressurizing member (restraining member) include a restraining band and a metallic frame. For example, a metallic frame may be configured to apply an adjustable load with a bolt or the like. That is, in one aspect of the present invention, the nonaqueous electrolyte energy storage device may further include a pressurizing member. In addition, a plurality of nonaqueous electrolyte energy storage devices may be arranged side by side in the thickness direction of the electrode assembly, and fixed with the use of a frame or the like with the plurality of nonaqueous electrolyte energy storage devices pressurized from both ends in the thickness direction. In addition, at least a part of the electrode assembly can be brought into a state of being pressed by a method without using a pressurizing member or the like, such as depressurizing the inside of the case.

The pressure applied to the electrode assembly in a state in which at least a part of the electrode assembly is pressed may be, for example, 0.1 MPa or more and 10 MPa or less, but is preferably 0.5 MPa or more and 4 MPa or less, and more preferably 0.6 MPa or more and 3.3 MPa or less. When at least a part of the electrode assembly is pressed at a pressure within the above range, the resistance after charge-discharge cycles of the nonaqueous electrolyte energy storage device becomes lower.

The shape of the nonaqueous electrolyte energy storage device of the present embodiment is not particularly limited, and examples thereof include a prismatic battery, a flat battery, a coin-type battery, and a button-type battery.

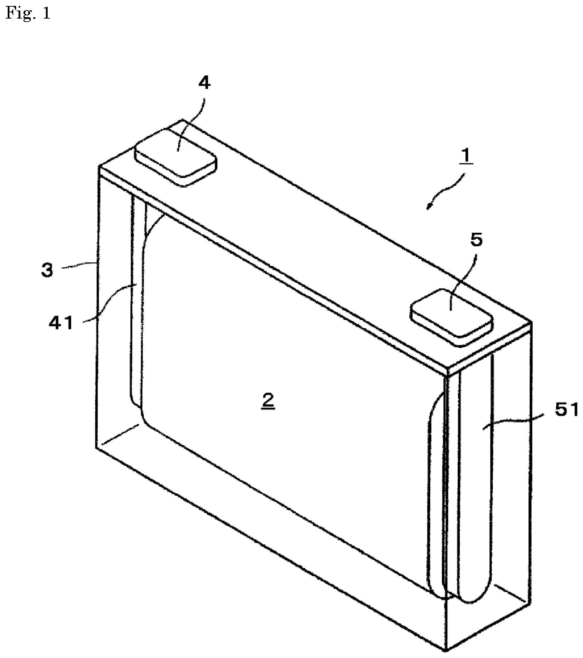

Fig. 1 illustrates a nonaqueous electrolyte energy storage device 1 as an example of a prismatic battery. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

<Energy storage apparatus>

The nonaqueous electrolyte energy storage device according to the present embodiment can be mounted, as an energy storage unit (battery module) configured by assembling a plurality of nonaqueous electrolyte energy storage devices, on a power source for an automobile such as an electric vehicle (EV), a hybrid electric vehicle (HEV), and a plug-in hybrid electric vehicle (PHEV), a power source for an electronic device such as a personal computer and a communication terminal, a power source for power storage, or the like. In this case, the technique of the present invention may be applied to at least one nonaqueous electrolyte energy storage device included in the energy storage unit.

An energy storage apparatus according to an embodiment of the present invention includes two or more energy storage devices and one or more of the nonaqueous electrolyte energy storage devices according to an embodiment of the present invention (hereinafter, referred to as a "second embodiment"). The technique according to an embodiment of the present invention may be applied to at least one nonaqueous electrolyte energy storage device included in the energy storage apparatus according to the second embodiment, one nonaqueous electrolyte energy storage device according to an embodiment of the present invention may be provided, and one or more energy storage devices not according to an embodiment of the present invention may be provided, or two or more nonaqueous electrolyte energy storage devices according to an embodiment of the present invention may be provided.

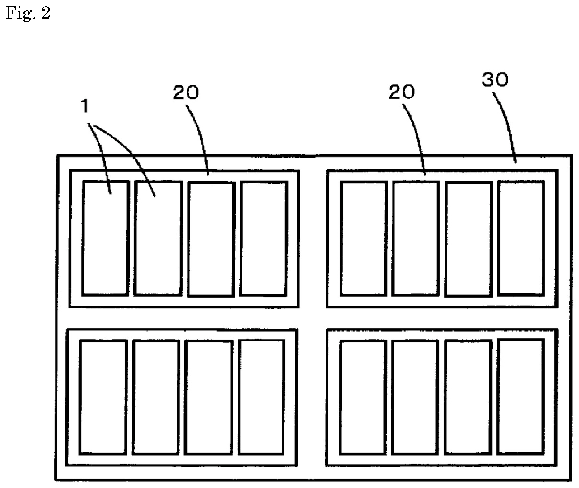

Fig. 2 illustrates an example of an energy storage apparatus 30 according to the second embodiment, formed by further assembling energy storage units 20 in each of which two or more electrically connected nonaqueous electrolyte energy storage devices 1 are assembled. The energy storage apparatus 30 may include a busbar (not illustrated) for electrically connecting two or more nonaqueous electrolyte energy storage devices 1, a busbar (not illustrated) for electrically connecting two or more energy storage units 20, and the like. The energy storage unit 20 or the energy storage apparatus 30 may include a state monitor (not illustrated) that monitors the state of one or more nonaqueous electrolyte energy storage devices. The energy storage unit 20 or the energy storage apparatus 30 may further include a pressurizing member for indirectly pressing at least a part of the electrode assembly of the nonaqueous electrolyte energy storage device.

<Method for manufacturing nonaqueous electrolyte energy storage device>

A method for manufacturing the nonaqueous electrolyte energy storage device of the present embodiment can be appropriately selected from known methods. The manufacturing method includes, for example, preparing an electrode assembly, preparing a nonaqueous electrolyte, accommodating the electrode assembly and the nonaqueous electrolyte in a case, and bringing at least a part of the electrode assembly into a pressed state in the case. Preparing the electrode assembly includes preparing a positive electrode and a negative electrode and forming an electrode assembly by stacking or winding the positive electrode and the negative electrode with a separator interposed therebetween.

Accommodating the nonaqueous electrolyte in a case can be appropriately selected from known methods. For example, when a nonaqueous electrolyte solution is used for the nonaqueous electrolyte, the nonaqueous electrolyte solution may be injected from an inlet formed in the case, followed by sealing the inlet.

The state in which at least a part of the electrode assembly is pressed in the case can be achieved, as described above, by providing a pressurizing member that presses the case from the outside.

<Other embodiments>

Note that the nonaqueous electrolyte energy storage device according to the present invention is not limited to the embodiments described above, and various changes may be made without departing from the gist of the present invention. For example, to the configuration of an embodiment, the configuration of another embodiment can be added, or a part of the configuration of an embodiment can be replaced with the configuration of another embodiment or a well-known technique. Furthermore, a part of the configuration of an embodiment can be deleted. In addition, a well-known technique can be added to the configuration of an embodiment.

While the case where the nonaqueous electrolyte energy storage device is used as a chargeable and dischargeable nonaqueous electrolyte secondary battery (for example, lithium ion secondary battery) has been described in the embodiments, the kind, shape, dimensions, capacity, and the like of the nonaqueous electrolyte energy storage device are not particularly limited. The present invention can also be applied to various secondary batteries.

While the electrode assembly in which the positive electrode and the negative electrode are stacked with the separator interposed therebetween has been described in the above embodiment, the electrode assembly may not include a separator. For example, the positive electrode and the negative electrode may be brought into direct contact with each other, with a non-conductive layer formed on the active material layer of the positive electrode or negative electrode.

EXAMPLES

Hereinafter, the present invention will be described more specifically by way of examples, but the present invention is not limited to the following examples.

[Example 1]

(Production of positive electrode)

Secondary particles of $LiNi_{1/2}Co_{3/10}Mn_{1/5}O_2$, which is a lithium transition metal composite oxide having an $\alpha$-$NaFeO_2$-type crystal structure and produced by a known method, were prepared. After mixing the secondary particles of $LiNi_{1/2}Co_{3/10}Mn_{1/5}O_2$ into an aqueous solution of boric acid ($H_3BO_3$) to prepare a suspension, the suspension was dried and calcined, thereby obtaining positive active material particles having a boron element present on at least a part of the surface. The content of the boron element in the positive active material particles was 0.5 mol% with respect to the content of metal elements other than the lithium element contained in the positive active material. In addition, in the obtained positive active material particles, the average particle size was 3.5 $\mu$m, the BET specific surface area ($S_1$) was 2.4 $m^2$/g, the specific surface area ($S_2$) was 0.36 $m^2$/g when the particles were assumed to be spheres with the average particle size as the diameter, the void index A was 6.7, and the average internal porosity was 12.5%.

A positive composite paste was prepared using the positive active material particles, acetylene black (AB) as a conductive agent, polyvinylidene fluoride (PVDF) as a binder, and N-methylpyrrolidone (NMP) as a dispersion medium. It is to be noted that the mass ratios of the positive active material particles, AB, and PVDF were set to be 93:4.5:2.5 (in terms of solid content). The positive composite paste was applied to both surfaces of an aluminum foil as a positive electrode substrate, and dried. Thereafter, roll pressing was performed to obtain a positive electrode.

(Preparation of negative electrode)

Graphite as a negative active material, styrene-butadiene rubber (SBR) as a binder, carboxymethyl cellulose (CMC) as a thickener, and water as a dispersion medium were used to prepare a negative composite paste. It is to be noted that the mass ratios of graphite, SBR, and CMC were set to be 98:1:1 (in terms of solid content). The negative composite paste was applied to both surfaces of a copper foil as a negative electrode substrate, and dried. Thereafter, roll pressing was performed to obtain a negative electrode.

(Nonaqueous electrolyte)

$LiPF_6$ was dissolved at a concentration of 1.2 mol/dm$^3$ in a solvent obtained by mixing ethylene carbonate, ethyl methyl carbonate, and dimethyl carbonate at a volume ratio of 30:35:35 to obtain a nonaqueous electrolyte.

(Separator)

As the separator, a separator was used in which an inorganic layer formed of inorganic particles and a binder was provided on one surface of a polyolefin microporous membrane (resin layer).

(Assembly of nonaqueous electrolyte energy storage device)

The positive electrode and the negative electrode were stacked with the separator interposed therebetween, thereby producing an electrode assembly. The separator was disposed so that the inorganic layer in the separator was in contact with the positive electrode. The electrode assembly was accommodated in a metal resin composite film case, the nonaqueous electrolyte was injected into the case, and then the case was sealed by heat sealing. Thereafter, the case was pressed in a thickness direction at a pressure of 0.6 MPa by a pressurizing member, thereby obtaining the nonaqueous electrolyte energy storage device of Example 1 in which a flat portion of the electrode assembly is in a pressed state. Since a case made of a metal-resin composite film is used, it can be determined that the pressure applied to the case and the pressure applied to the electrode assembly are substantially equal.

[Examples 2 to 5 and Comparative Examples 1 to 6]

The respective nonaqueous electrolyte energy storage devices of Examples 2 to 5 and Comparative Examples 1 to 6 were obtained in the same manner as in Example 1, except that the positive active material particles and the separator shown in Table 1 were used, and pressing of the electrode assembly was performed at the pressure shown in Table 1 or was not performed.

As the positive active material particles, secondary particles of $LiNi_{1/2}Co_{3/10}Mn_{1/5}O_2$, which is a lithium transition metal composite oxide having an $\alpha$-NaFeO$_2$-type crystal structure and produced by a known method, were used in all cases, and for some of the positive active material particles, a boron element was allowed to be present on the surface by the same procedure as in Example 1.

In addition, as the separator without an inorganic layer, a polyolefin microporous membrane (a separator composed only of a resin layer) was used. That is, Example 4 was a nonaqueous electrolyte energy storage device in which the resin layer of the separator is in contact with the positive electrode.

[Evaluation]

(1) Initial charge-discharge

The obtained respective nonaqueous electrolyte energy storage devices were subjected to initial charge-discharge under the following conditions. In a thermostatic chamber at 25°C, the nonaqueous electrolyte energy storage devices were subjected to constant current charge at a charge current of 1.0 C and an end-of-charge voltage of 4.1 V, and then to constant voltage charge at 4.1 V. With regard to the charge termination conditions, the charge was performed until the total charge time reached 3 hours. The charge was followed by a pause period of 10 minutes. The energy storage devices were subjected to constant current discharge at a discharge current of 1.0 C and an end-of-discharge voltage of 3.0 V.

(2) Initial direct-current resistance

For each nonaqueous electrolyte energy storage device after initial charge-discharge, the nonaqueous electrolyte energy storage device was stored in a thermostatic chamber at 25°C for 3 hours, and then constant current charge was performed at 25°C at a current of 1.0 C to set the SOC to 50%. Thereafter, at 25°C, constant current discharge was performed at a constant current of 0.2 C, 0.5 C, or 1.0 C for 30 seconds each. After completion of each discharge, the energy storage devices were subjected to constant current charge at a current of 0.2 C to set the SOC to 50%. The relationship between the current and the voltage at 10 seconds after the start of discharge for each discharge was plotted, and the direct-current resistance of each nonaqueous electrolyte energy storage device was determined from the slope of a straight line obtained from the plot of three points. Table 1 shows, as relative values, the initial direct-current resistance of each nonaqueous electrolyte energy storage device, with the initial direct-current resistance of the nonaqueous electrolyte energy storage device of Comparative Example 2 taken as 100%.

(3) Charge-discharge cycle test

Then, for each nonaqueous electrolyte energy storage device, constant current discharge was performed at a current of 1.0 C in a thermostatic chamber at 25°C to set the SOC to 0%, and then constant current charge was performed at a current of 0.5 C until the SOC reached 50%. Subsequently, the nonaqueous electrolyte energy storage device was stored in a thermostatic chamber at 55°C for 4 hours. Subsequently, constant current charge was performed up to a voltage corresponding to an SOC of 80% at a current of 4 C, and then constant current discharge was performed at a current of 4 C up to a voltage corresponding to an SOC of 20%. The charge and discharge cycles were repeated for 2,150 hours without a pause time after the charge and discharge.

(4) Direct-current resistance after charge-discharge cycle test

Thereafter, the direct-current resistance of each nonaqueous electrolyte energy storage device after the charge-discharge cycle test was determined by the same procedure as the procedure for determining the initial direct-current resistance. Table 1 shows, as relative values, the direct-current resistance of each nonaqueous electrolyte energy storage device after the charge-discharge cycle test, with the direct-current resistance of the nonaqueous electrolyte energy storage device of Comparative Example 2 after the charge-discharge cycle test taken as 100%.

[Table 1]

| | Positive active material particle | | | | | | Pressing to electrode assembly /MPa | Separator | Resistance (relative value) | |
| --- | --- | --- | --- | --- | --- | --- | --- | --- | --- | --- |
| | Positive active material | Average particle size/$\mu$m | $S_1$ /m²/g | $S_2$ / m²/g | Void index A | Presence or absence of boron element | | Presence or absence of inorganic layer | Initial/% | After cycle test/% |
| Example 1 | LiNi$_{1/2}$CO$_{3/10}$Mn$_{1/5}$O$_2$ | 3.5 | 2.4 | 0.36 | 6.7 | Present | 0.6 | Present | 93 | 95 |
| Example 2 | LiNi$_{1/2}$Co$_{3/10}$Mn$_{1/5}$O$_2$ | 3.5 | 2.4 | 0.36 | 6.7 | Present | 2.0 | Present | 95 | 94 |
| Example 3 | LiNi$_{1/2}$CO$_{3/10}$Mn$_{1/5}$O$_2$ | 3.5 | 2.4 | 0.36 | 6.7 | Present | 3.3 | Present | 95 | 94 |
| Example 4 | LiNi$_{1/2}$CO$_{3/10}$Mn$_{1/5}$O$_2$ | 3.5 | 2.4 | 0.36 | 6.7 | Present | 0.6 | Absent | 92 | 92 |
| Example 5 | LiNi$_{1/2}$Co$_{1/5}$Mn$_{3/10}$O$_2$ | 4.3 | 1.8 | 0.29 | 6.0 | Present | 0.6 | Present | 98 | 90 |
| Comparative Example 1 | LiNi$_{1/2}$Co$_{3/10}$Mn$_{1/5}$O$_2$ | 3.2 | 1.4 | 0.39 | 3.6 | Absent | Absent | Present | 100 | 180 |
| Comparative Example 2 | LiNi$_{1/2}$Co$_{3/10}$Mn$_{1/5}$O$_2$ | 3.2 | 1.4 | 0.39 | 3.6 | Absent | 0.6 | Present | 100 | 100 |
| Comparative Example 3 | LiNi$_{1/2}$Co$_{3/10}$Mn$_{1/5}$O$_2$ | 3.1 | 1.2 | 0.40 | 3.0 | Present | 0.6 | Present | 97 | 100 |
| Comparative Example 4 | LiNi$_{1/2}$Co$_{3/10}$Mn$_{1/5}$O$_2$ | 4.1 | 1.8 | 0.31 | 5.8 | Absent | Absent | Present | 98 | 255 |
| Comparative Example 5 | LiNi$_{1/2}$Co$_{3/10}$Mn$_{1/5}$O$_2$ | 4.1 | 1.8 | 0.31 | 5.8 | Absent | 0.6 | Present | 98 | 99 |
| Comparative Example 6 | LiNi$_{1/2}$Co$_{3/10}$Mn$_{1/5}$O$_2$ | 3.5 | 2.4 | 0.36 | 6.7 | Present | Absent | Present | 97 | 103 |

EP 4 756 969 A1

In the nonaqueous electrolyte energy storage device of Comparative Example 1, positive active material particles having a void index A of less than 5 and having no boron element present on at least a part of the surface were used, at least a part of the electrode assembly was not in a pressed state, and the direct-current resistance after the charge-discharge cycle test was high. Compared with the nonaqueous electrolyte energy storage device of Comparative Example 1, the direct-current resistance after the charge-discharge cycle test was not sufficiently low in the nonaqueous electrolyte energy storage device of Comparative Example 2, in which at least a part of the electrode assembly was in a pressed state, and in the nonaqueous electrolyte energy storage device of Comparative Example 3, in which at least a part of the electrode assembly was in a pressed state and a boron element was present on at least a part of the surface of the positive active material particles.

In the nonaqueous electrolyte energy storage device of Comparative Example 4, positive active material particles having a void index A of 5 or more and having no boron element present on at least a part of the surface were used, at least a part of the electrode assembly was not in a pressed state, and the direct-current resistance after the charge-discharge cycle test was significantly high. Compared with the nonaqueous electrolyte energy storage device of Comparative Example 4, the direct-current resistance after the charge-discharge cycle test was not sufficiently low in the nonaqueous electrolyte energy storage device of Comparative Example 5, in which at least a part of the electrode assembly was in a pressed state, and in the nonaqueous electrolyte energy storage device of Comparative Example 6, in which a boron element was present on at least a part of the surface of the positive active material particles.

In contrast, in each of the nonaqueous electrolyte energy storage devices of Examples 1 to 5, positive active material particles having a void index A of 5 or more and having a boron element present on at least a part of the surface were used, at least a part of the electrode assembly was in a pressed state, and the direct-current resistance (relative value) after the charge-discharge cycle test was 95% or less, which was sufficiently low.

INDUSTRIAL APPLICABILITY

The present invention can be applied to a nonaqueous electrolyte energy storage device and the like used as power sources for electronic devices such as personal computers and communication terminals, automobiles, and the like.

DESCRIPTION OF REFERENCE SIGNS

1    Nonaqueous electrolyte energy storage device
2    Electrode assembly
3    Case
4    Positive electrode terminal
41    Positive electrode lead
5    Negative electrode terminal
51    Negative electrode lead
20    Energy storage unit
30    Energy storage apparatus

**Claims**

1. A nonaqueous electrolyte energy storage device comprising:

an electrode assembly including a positive electrode containing positive active material particles, and a negative electrode,
wherein a void index A represented by the following Formula (1) in the positive active material particles is 5 or more,
a boron element is present on at least a part of a surface of the positive active material particles, and
at least a part of the electrode assembly is in a pressed state:

$$A = S_1/S_2 \qquad (1)$$

in Formula (1), $S_1$ is a BET specific surface area of the positive active material particles, and $S_2$ is a specific surface area obtained when the positive active material particles are assumed to be spheres each having a diameter equal to an average particle size thereof.

2.  The nonaqueous electrolyte energy storage device according to claim 1, wherein the electrode assembly further includes a separator disposed between the positive electrode and the negative electrode, and
    the separator has a layer that is in contact with the positive electrode and contains a resin as a main component.

3.  The nonaqueous electrolyte energy storage device according to claim 1 or 2, wherein the positive active material particles include a lithium transition metal composite oxide having an $\alpha$-NaFeO$_2$-type crystal structure.

4.  The nonaqueous electrolyte energy storage device according to claim 1 or 2, wherein at least a part of the electrode assembly is in a state of being pressed at 0.5 MPa or more and 4 MPa or less.

5.  An energy storage apparatus comprising two or more energy storage devices and one or more of the nonaqueous electrolyte energy storage devices according to claim 1 or 2.

Fig. 1

Fig. 2

## INTERNATIONAL SEARCH REPORT

| International application No. |
| --- |
| **PCT/JP2024/026920** |

**A. CLASSIFICATION OF SUBJECT MATTER**

*H01M 10/058*(2010.01)i; *H01M 4/505*(2010.01)i; *H01M 4/525*(2010.01)i; *H01M 10/052*(2010.01)i; *H01M 50/414*(2021.01)i
FI:  H01M10/058; H01M4/525; H01M4/505; H01M50/414; H01M10/052

According to International Patent Classification (IPC) or to both national classification and IPC

**B. FIELDS SEARCHED**

Minimum documentation searched (classification system followed by classification symbols)

H01M10/058; H01M4/505; H01M4/525; H01M10/052; H01M50/414

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2009-205893 A (NIPPON CHEMICAL INDUSTRIAL CO., LTD.) 10 September 2009 (2009-09-10)<br>claims 1-2, paragraphs [0019]-[0022], [0053] | 1-5 |
| Y | WO 2021/059857 A1 (PANASONIC CORPORATION) 01 April 2021 (2021-04-01)<br>paragraphs [0005], [0012] | 1-5 |
| Y | WO 2014/024432 A1 (SANYO ELECTRIC CO., LTD.) 13 February 2014 (2014-02-13)<br>paragraphs [0002], [0006], [0044] | 1-5 |

☐ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 October 2024** | **15 October 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

# EP 4 756 969 A1

## INTERNATIONAL SEARCH REPORT
### Information on patent family members

International application No.

**PCT/JP2024/026920**

| Patent document cited in search report | | | Publication date (day/month/year) | Patent family member(s) | | | Publication date (day/month/year) |
|---|---|---|---|---|---|---|---|
| JP | 2009-205893 | A | 10 September 2009 | US 2009/0226811 A1 claims 1-2, paragraphs [0031]-[0034], [0065] KR 10-2009-0092729 A | | | |
| WO | 2021/059857 | A1 | 01 April 2021 | US 2022/0367852 A1 paragraphs [0006], [0014] EP 4037025 A1 CN 114467199 A | | | |
| WO | 2014/024432 | A1 | 13 February 2014 | (Family: none) | | | |

Form PCT/ISA/210 (patent family annex) (July 2022)

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015153551 A